# EUROPEAN PATENT SPECIFICATION

(11) **EP 2 974 603 B1**
(45) Date of publication and mention of the grant of the patent: **15.02.2017**
(21) Application number: 15176792.8
(22) Date of filing: 15.07.2015
(51) Int. Cl.: A23C 3/033, A23L 3/22, F28D 7/02, F28D 7/04, F28D 7/10

(54) **A PASTEURIZER FOR CONTINUOUSLY TREATING SMALL VOLUMES OF LIQUID FOODS**
PASTEURISATOR ZUM KONTINUIERLICHEN BEHANDELN KLEINER VOLUMINA VON FLÜSSIGEN NAHRUNGSMITTELN
PASTEURISATEUR POUR LE TRAITEMENT EN CONTINU DE PETITS VOLUMES DE LIQUIDES ALIMENTAIRES

(30) Priority: 16.07.2014 IT TO20140566
(43) Date of publication of application: 20.01.2016
(73) Proprietor: Consiglio Nazionale Delle Ricerche, 00185 Roma (IT); Università Degli Studi Di Torino, 10124 Torino (IT); Giada S.A.S. di Gariglio Gian Marco & C., 10068 Villafranca Piemonte (TO) (IT)
(72) Inventor: Cavallarin, Laura, I-10125 TORINO (IT); Giribaldi, Marzia, I-10139 TORINO (IT); Antoniazzi, Sara, I-10020 CAMBIANO (Torino) (IT); Bertino, Enrico, I-10133 TORINO (IT); Coscia, Alessandra, I-10133 TORINO (IT); Gariglio, Gian Marco, I-10024 MONCALIERI (Torino) (IT)
(74) Representative: Vanzini, Christian

(56) References cited:
- GB-A- 744 545
- US-A- 2 866 328
- US-A- 4 534 282
- US-A- 4 684 531
- US-A- 5 309 987
- US-A1- 2003 052 278
- US-A1- 2005 031 751
- US-A1- 2006 093 717
- US-A1- 2010 173 058
- US-A1- 2011 320 060
- US-B1- 6 250 379

## Description

The present invention relates to a pasteurizer comprising
a pipe system for transporting a liquid product to be processed, said pipe system comprising, in succession, a liquid inlet, a heating section, a thermostatic holding section, a cooling section and a liquid outlet;
a heating pipe system for transporting a heating fluid for delivering heat to the liquid product in the heating section; and
a cooling pipe system for transporting a cooling fluid for removing heat from the liquid product in the cooling section.

The milk pasteurization method currently used in donated human milk banks and donkey milk production installations is based on the Holder method (in which the product is heated at 62.5°C for 30 minutes). This heat treatment ensures safety in microbiological terms and preserves some key components of the milk (for example, some vitamins, oligosaccharides, lactose and polyunsaturated fatty acids) [1]. However, the Holder heat treatment causes the inactivation of some of the immunological and anti-infective factors in the milk [1, 2], which are of fundamental importance for sensitive patients for whom the use of heat-treated human milk or donkey milk is intended. To overcome these negative effects, an alternative pasteurization technique, called HTST (High Temperature Short Time), has been tested; in this technique, the product is heated at 72°C for 15-20 seconds. The results of previous research on human bank milk have demonstrated the efficacy of this technique in reducing the microbial and viral count [3, 4], while also retaining more immunoglobulins and other antimicrobial and pro-metabolic factors [3, 5]. A difference was also found in the accumulation of oxidative changes in milk protein according to the type of pasteurization used [6]. In conclusion, it can be stated that the HTST method is more suitable for milk processing, since it preserves more of the structure and activity of some key nutritional components in terms of immunological and other aspects. At the same time, the reduced impact on the components ensures greater preservation of the organoleptic characteristics of the original milk and greater acceptability and palatability of the end product.

There are known plate heat exchangers used for HTST heat treatment of high volumes of milk. However, a plate system is unsuitable for the processing of small volumes of product, and owing to the complexity of its operation and maintenance its use is impractical in hospital ward laboratories where human bank milk is pasteurized, and in donkey milk processing installations.

One object of the invention is therefore to provide a pasteurizer capable of continuously processing small or larger volumes of product by the HTST method.

Another object of the invention is to provide a pasteurizer which is easy to use and maintain.

In view of these objects, the invention proposes a pasteurizer of the type defined initially, wherein said heating section includes a shell-and-tube heat exchanger, comprising a single tube through which the liquid product can flow and an outer shell through which the heating fluid can flow, the tube-side flow and the shell-side flow being in counter-flow configuration;
said thermostatic holding section includes a tubular structure comprising a single tube through which the liquid product can flow, and an outer shell in which the tube of the thermostatic holding section is placed, a thermal insulation material being placed around the shell; and
said cooling section includes a shell-and-tube heat exchanger, comprising a single tube through which the liquid product can flow, and an outer shell through which the cooling fluid can flow, the tube-side flow and the shell-side flow being in counter-flow configuration;
wherein the heat exchanger of the heating section, the tubular structure of the thermostatic holding section and the heat exchanger of the cooling section are constructively identical elements.

Using the pasteurizer according to the invention, it is possible to provide a facility which can be operated in a highly modular way, for continuous product processing in thin tubes and in variable volumes which may be very small, for example about 100 ml. Because of the suitability of HTST heat treatment for small product volumes, even small to medium production requirements can now be met while gaining the benefits of HTST technology in terms of microbiological safety, optimal preservation of nutritional value, retention of the immunological and anti-infective characteristics, and better preservation of the organoleptic profile.

A further advantage is the higher speed of the whole pasteurization process compared with facilities currently available on the market (the process takes minutes, rather than hours). The system not only provides a higher process speed and more efficient heat exchange between the environment and the product, but also consumes less energy than the "batch processing" systems on the market at present.

Although the present invention was designed with a view to pasteurization of human bank milk and donkey milk, it can be applied more generally in other fields, for example in the food or pharmaceutical industries, where there is a need to process small volumes of product with fast, continuous, low-impact systems.

Preferred embodiments of the invention are defined in the dependent claims, which are to be considered as an integral part of the present description.

In particular, if the heat exchanger of the heating section, the tube of the thermostatic holding section and the heat exchanger of the cooling section are made of optically transparent material, the operating cycle of the pasteurizer can be monitored visually and any anomalies can be detected immediately.

Moreover, if the heat exchanger of the heating section, the tube of the thermostatic holding section and the heat exchanger of the cooling section are made of glass, the total absence of transfers to food matrices is ensured.

Additionally, if the heat exchanger of the heating section and the heat exchanger of the cooling section are one-piece elements, then on the one hand the provision of seals is unnecessary, and on the other hand any risk of contact between the fluids is avoided; furthermore, the exchangers can be easily replaced even by non-expert personnel.

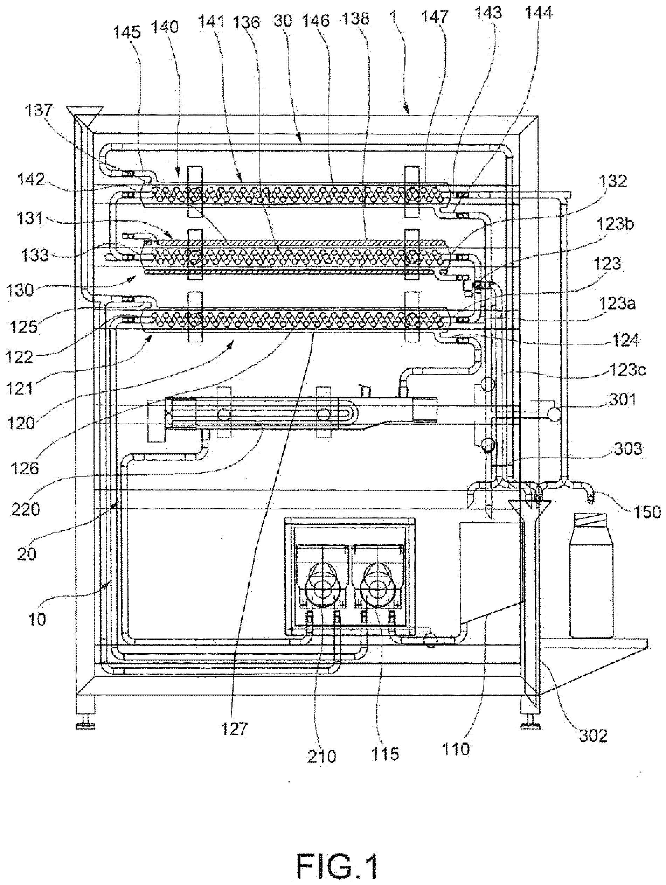

Further characteristics and advantages of the pasteurizer according to the invention will be more evident from the following detailed description of an embodiment of the invention, given with reference to the attached drawing, provided purely as a non-limiting illustration, which shows a schematic front view of a pasteurizer according to the invention.

The pasteurizer comprises a support structure 1 on which the various components of the installation are mounted.

These components essentially comprise a main pipe system 10 for transporting a liquid product to be processed, a heating pipe system 20 for transporting a heating fluid, for example water, which can deliver heat to the liquid product, and a cooling pipe system 30 for transporting a cooling fluid, for example water, which can remove heat from the liquid product.

The main pipe system 10 comprises, in succession, a liquid inlet 110, a heating section 120 in which the liquid product receives heat from the heating fluid, a thermostatic holding section 130, a cooling section 140 in which the liquid product delivers heat to the cooling fluid, and a liquid outlet 150.

In the illustrated example, the liquid inlet 110 comprises a supply tank. The liquid inlet 110 is also associated with a pump 115 for drawing the liquid product from the tank and conveying it into the main pipe system 10. If the product to be processed is milk, this pump is preferably a peristaltic pump; this is because, with this type of pump, the flow rate can be controlled without altering the product (by contrast with the centrifugal pumps which are commonly used).

The heating section 120 comprises a shell-and-tube heat exchanger 121 which has a liquid product inlet and outlet 122, 123, and a heating fluid inlet and outlet 124, 125. The liquid product inlet 122 is connected to the liquid inlet 110 of the pipe system 10, and the liquid product outlet 123 is connected to the thermostatic holding section 130. The liquid product outlet 123 of the heating section 120 is associated with a temperature sensor 123a and a solenoid diversion valve 123b. The outlet of the solenoid diversion valve 123b is associated with an inlet of a diversion branch 123c, the outlet of which is selectively connectable to the supply tank 110 or to a discharge outlet.

The thermostatic holding section 130 comprises a tubular structure 131 having a liquid product inlet and outlet 132, 133. The liquid product inlet 132 is connected to the liquid product outlet 123 of the heat exchanger 121 of the heating section 120, and the liquid product outlet 133 of the thermostatic holding section 130 is connected to the cooling section 140.

The cooling section 140 comprises a shell-and-tube heat exchanger 141 which has a liquid product inlet and outlet 142, 143, and a heating fluid inlet and outlet 144, 145. The liquid product inlet 142 is connected to the liquid product outlet 133 of the tubular structure 131 of the thermostatic holding section 130, and the liquid product outlet 143 of the heating section 140 is connected to the liquid outlet 150 of the pipe system 10.

In the illustrated example, the liquid outlet 150 is designed to feed a container for collecting the processed product (bottling station).

The heating pipe system 20 comprises a pump 210 and a heater 220, for example an electrical resistance heater. The delivery side of the pump 210 is connected to the heating fluid inlet 124 of the heat exchanger 121 of the heating section 120, through the heater 220, and the intake side of the pump 210 is connected to the heating fluid outlet 125.

In the illustrated example, the cooling pipe system 30, on the one hand, connects the cooling fluid inlet 144 of the heat exchanger 141 of the cooling section 140 to a cold mains water supply through a tap 301, and, on the other hand, connects the cooling fluid outlet 145 of the heat exchanger 141 of the cooling section 140 to a discharge outlet 302. The cooling pipe system 30 further comprises a branch 303 which can be selectively activated to introduce fluid into the supply tank 110 to wash the pasteurizer when necessary. If the pasteurizer is washed, the liquid outlet 150 of the main pipe system 10 can be switched to discharge the waste fluids produced by the washing into the discharge outlet 302.

The connection to the cold water mains makes it possible to achieve a final temperature of 20°C in the processed liquid product.

According to another embodiment which is not shown, the cooling pipe system can comprise a closed circuit for a recirculating coolant fluid, associated with cooling devices. In this case, it is possible to provide a low final temperature of the product, for example 4°C, as specified by some processing protocols.

An electronic control unit is associated with the pasteurizer to control and monitor the pasteurization process.

The heat exchanger 121 of the heating section 120 is a single-pass shell-and-tube heat exchanger, and comprises a single tube 126 through which the liquid product can flow and an outer shell 127 through which the heating fluid can flow; the tube-side flow and the shell-side flow are in counter-flow configuration. The tube 126 therefore extends along a main direction from the liquid product inlet 122 to the liquid product outlet 123 of the heat exchanger 121 of the heating section 120. The shell 127 extends, parallel to the main direction of the tube 126, from the heating fluid inlet 124 to the heating fluid outlet 125 of the heat exchanger 121 of the heating section 120.

To increase the heat exchange surface for a given length of the exchanger, the tube 126 has a serpentine shape, particularly a coil shape.

The heat exchanger 121 is made of optically transparent material, particularly glass. Preferably, the heat exchanger 121 is an element made in one piece.

The tubular structure 131 of the thermostatic holding section 130 comprises a single tube 136 through which the liquid product can flow and an outer shell 137 which forms a sleeve around the tube 136. The tube 136 extends, along a main direction, from the liquid product inlet 132 to the liquid product outlet 133 of the tubular structure 131 of the thermostatic holding section 130. A thermal insulation material 138 is also placed around the shell 137.

To increase the length of the tube 136 for a given length of the tubular structure 131, the tube 136 has a serpentine shape, particularly a coil shape.

With the exception of the thermal insulation material 138, the tubular structure 131 is made of optically transparent material, particularly glass. Preferably, the heat exchanger 131 is an element made in one piece.

The heat exchanger 141 of the cooling section 140 is a single-pass shell-and-tube heat exchanger, and comprises a single tube 146 through which the liquid product can flow and an outer shell 147 through which the cooling fluid can flow; the tube-side flow and the shell-side flow are in counter-flow configuration. The tube 146 therefore extends, along a main direction, from the liquid product inlet 142 to the liquid product outlet 143 of the heat exchanger 141 of the cooling section 140. The shell 147 extends, parallel to the main direction of the tube 146, from the cooling fluid inlet 144 to the cooling fluid outlet 145 of the heat exchanger 141 of the cooling section 140.

To increase the heat exchange surface for a given length of the exchanger, the tube 146 has a serpentine shape, particularly a coil shape.

The heat exchanger 141 is made of optically transparent material, particularly glass. Preferably, the heat exchanger 141 is an element made in one piece.

Preferably, the heat exchanger 121 of the heating section 120, the tubular structure 131 of the thermostatic holding section 130 and the heat exchanger 141 of the cooling section 140 are constructively identical elements. Consequently, in the tubular structure of the thermostatic holding section, the pipes corresponding to the inlet and outlet of the cooling fluid and of the heating fluid in the exchangers are closed, thus converting the outer shell into an insulating sleeve.

The inventors have constructed a prototype of the pasteurizer according to the invention, which is capable of processing product flows of between 4 and 9 litres per hour, for continuous pasteurization of human milk or donkey milk.
The operating process of the pasteurizer will now be described.

The product to be processed is poured into the tank 110 and is sent from there, by means of the pump 115, to the exchanger 121 of the heating section 120, to raise its temperature to a predetermined level established by the control unit. The flow rate can be regulated by regulating the speed of the pump 115.

The temperature of the product is raised by indirect counter-flow heat exchange with the heating fluid (water or other heated fluid) which is heated in the heater 220, controlled by a heat regulator associated with the control unit, and sent to the exchanger 121 by means of the pump 210 so as to return by recirculation to the heater 220.

From the outlet of the exchanger 121 of the heating section 120, the pressurized liquid product passes to the thermostatic holding section 130 and flows through its tube 136. This tube must have a suitable length for providing a variable holding period of between 15 and 30 seconds (the holding periods specified in the case where the product is milk).

From the outlet of the thermostatic holding section 130, the product passes into the exchanger 141 of the cooling section 140, encountering the cooling fluid (cold mains water if a final product temperature of about 20°C is required, or ice water or other liquid to provide a final temperature of 4°C) in counter-flow.

From the outlet of the exchanger 141 of the cooling section 140, the main pipe system 10 transports the pasteurized and cooled product to the bottling station 150.

Using the readings of the temperature sensor 123a associated with the outlet of the heating section 120, the control unit of the system is programmed to ensure that, if there is a deviation from the predetermined pasteurization temperature, the product is not directed towards the next stages of the pasteurization process, but is redirected into the tank 110 through the diversion valve 123b for re-pasteurization, or to another separate container if necessary.

The diversion method is assisted by a timer circuit to ensure that all the product present in the main pipe system 10 returns to the tank 110 even when the temperature has returned to the correct level.

An example of a washing procedure comprises the following steps:
1) First once-through hot rinse;
2) Basic recirculating wash based on a water/caustic soda solution formed in the tank 110. The solution is heated by the heater 220 and is temperature-controlled (sensor 123a);
3) Once-through hot rinse;
4) Recirculating acid wash based on a water/nitric acid solution formed in the tank 110. The solution is heated by the heater 220 and is temperature-controlled (sensor 123a);
5) Final once-through cold rinse.
The washing procedure can be partially or fully automated.

### References

1. Tully, D.B. et al. Donor milk: what's in it and what's not. J Hum Lact. 2001; 17: 152-5.
2. De Nisi, G et al. Linee guida per la costituzione e l'organizzazione di una banca del latte umano donato. Trento, Italy: Ed. New Magazine, 2006.
3. Dhar, J et al. Pasteurization efficiency of a HTST system for human milk. J Food Sci. 1996; 61: 569-73.
4. Hamprecht, K et al. Cytomegalovirus (CMV) inactivation in breast milk: reassessment of pasteurization and freeze-thawing. Pediatr Res. 2004; 56: 529-35.
5. Goldblum, R.M. et al. Rapid high-temperature treatment of human milk. J Pediatr. 1984; 104: 380-5.
6. Baro, C et al. Effect of two pasteurization methods on the protein content of human milk. Front Biosci. (Elite Ed). 2011; 3: 818-29.

## Claims

1. Pasteurizer comprising
a main pipe system (10) for transporting a liquid product to be processed, said pipe system comprising, in succession, a liquid inlet (110), a heating section (120), a thermostatic holding section (130), a cooling section (140) and a liquid outlet (150);
a heating pipe system (20) for transporting a heating fluid for delivering heat to the liquid product in the heating section (120); and
a cooling pipe system (30) for transporting a cooling fluid for removing heat from the liquid product in the cooling section (140);
**characterized in that**
said heating section includes a shell-and-tube heat exchanger (121), comprising a single tube (126) through which the liquid product can flow and an outer shell (127) through which the heating fluid can flow, the tube-side flow and the shell-side flow being in counter-flow configuration;
said thermostatic holding section includes a tubular structure (131) comprising a single tube (136) through which the liquid product can flow, and an outer shell (137) in which the tube (136) of the thermostatic holding section (130) is placed, a thermal insulation material (138) being placed around the shell; and
said cooling section includes a shell-and-tube heat exchanger (141), comprising a single tube (146) through which the liquid product can flow, and an outer shell (147) through which the cooling fluid can flow, the tube-side flow and the shell-side flow being in counter-flow configuration,
wherein the heat exchanger (121) of the heating section (120), the tubular structure (131) of the thermostatic holding section (130) and the heat exchanger (141) of the cooling section (140) are constructively identical elements.

2. Pasteurizer according to Claim 1, wherein the tube (126) of the heat exchanger (121) of the heating section (120), the tube (136) of the thermostatic holding section (130) and the tube (146) of the heat exchanger (141) of the cooling section (140) each have a coil shape.

3. Pasteurizer according to Claim 1 or 2, wherein the heat exchanger (121) of the heating section (120), the tube (136) of the thermostatic holding section (130) and the heat exchanger (141) of the cooling section (140) are made of optically transparent material.

4. Pasteurizer according to Claim 3, wherein the heat exchanger (121) of the heating section (120), the tube (136) of the thermostatic holding section (130) and the heat exchanger (141) of the cooling section (140) are made of glass.

5. Pasteurizer according to any one of the preceding claims, wherein the heat exchanger (121) of the heating section (120) and the heat exchanger (141) of the cooling section (140) are each an element made in one piece.

## Patentansprüche

1. Pasteurisierapparat, aufweisend:
ein Hauptrohrnetz (10) zum Transportieren eines zu verarbeitenden flüssigen Produkts, wobei das Rohrnetz nacheinander einen Flüssigkeitszugang (110), einen Heizbereich (120), einen thermostatischen Haltebereich (130), einen Kühlbereich (140) und einen Flüssigkeitsausgang (150) aufweist;
ein Heizrohrnetz (20) zum Transportieren eines Heizfluids zum Liefern von Wärme zu dem flüssigen Produkt in dem Heizbereich (120); und
ein Kühlrohrnetz (30) zum Transportieren eines Kühlfluids zum Entziehen von Wärme von dem flüssigen Produkt in dem Kühlbereich (140);
**dadurch gekennzeichnet, dass**
der Heizbereich einen Mantel-Röhrenwärmetauscher (121) umfasst, der ein einziges Rohr (126), durch das das flüssige Produkt fließen kann und einen äußeren Mantel (127), durch den das Heizfluid fließen kann, aufweist, wobei der röhrenseitige Fluss und der mantelseitige Fluss in einer Gegenstromanordnung sind;
der thermostatische Haltebereich eine Röhrenstruktur (131) umfasst, die ein einziges Rohr (136), durch das das flüssige Produkt fließen kann und einen äußeren Mantel (137), in dem das Rohr (136) des thermostatischen Haltebereichs (130) angeordnet ist, aufweist, wobei eine Wärmedämmstoff (138) um den Mantel herum angeordnet ist; und
der Kühlbereich einen Mantel-Röhrenwärmetauscher (141) umfasst, der ein einziges Rohr (146), durch das das flüssige Produkt fließen kann und einen äußeren Mantel (147), durch den das Kühlfluid fließen kann, aufweist, wobei der röhrenseitige Fluss und der mantelseitige Fluss in einer Gegenstromanordnung sind,
wobei der Wärmetauscher (121) des Heizbereichs (120), die Röhrenstruktur (131) des thermostatischen Haltebereichs (130) und der Wärmetauscher (141) des Kühlbereichs (140) baulich identische Elemente sind.

2. Pasteurisierapparat nach Anspruch 1, wobei das Rohr (126) des Wärmetauschers (121) des Heizbereichs (120), das Rohr (136) des thermostatischen Haltebereichs (130) und das Rohr (146) des Wärmetauschers (141) des Kühlbereichs (140) jeweils eine Wendelform aufweisen.

3. Pasteurisierapparat nach Anspruch 1 oder 2, wobei der Wärmetauscher (121) des Heizbereichs (120), das Rohr (136) des thermostatischen Haltebereichs (130) und der Wärmetauscher (141) des Kühlbereichs (140) aus optisch transparentem Werkstoff hergestellt sind.

4. Pasteurisierapparat nach Anspruch 3, wobei der Wärmetauscher (121) des Heizbereichs (120), das Rohr (136) des thermostatischen Haltebereichs (130) und der Wärmetauscher (141) des Kühlbereichs (140) aus Glas hergestellt sind.

5. Pasteurisierapparat nach einem der vorangehenden Ansprüche, wobei der Wärmetauscher (121) des Heizbereichs (120) und der Wärmetauscher (141) des Kühlbereichs (140) jeweils ein einstückiges Element sind.

## Revendications

1. Pasteurisateur comprenant
un système de tuyauterie principal (10) pour transporter un produit liquide à traiter, ledit système de tuyauterie comprenant, successivement, une entrée de liquide (110), une section de chauffe (120), une section de maintien thermostatique (130), une section de refroidissement (140) et une sortie de liquide (150) ;
un système de tuyauterie de chauffe (20) pour transporter un fluide chauffant afin de délivrer de la chaleur au produit liquide dans la section de chauffe (120) ; et
un système de tuyauterie de refroidissement (30) pour transporter un fluide de refroidissement afin de retirer de la chaleur du produit liquide dans la section de refroidissement (140) ;
**caractérisé en ce que**
ladite section de chauffe inclut un échangeur thermique à calandre (121), comprenant un tube unique (126) à travers lequel le produit liquide peut s'écouler et une enveloppe extérieure (127) à travers laquelle le fluide chauffant peut s'écouler, le flux côté tube et le flux côté enveloppe étant dans une configuration à contre-courant ;
ladite section de maintien thermostatique inclut une structure tubulaire (131) comprenant un tube unique (136) à travers lequel le produit liquide peut s'écouler, et une enveloppe extérieure (137) dans laquelle le tube (136) de la section de maintien thermostatique (130) est placé, un matériau d'isolation thermique (138) étant placé autour de l'enveloppe ; et
ladite section de refroidissement inclut un échangeur thermique à calandre (141), comprenant un tube unique (146) à travers lequel le produit liquide peut s'écouler, et une enveloppe extérieure (147) à travers laquelle le fluide de refroidissement peut s'écouler, le flux côté tube et le flux côté enveloppe étant dans une configuration à contre-courant,
dans lequel l'échangeur thermique (121) de la section de chauffe (120), la structure tubulaire (131) de la section de maintien thermostatique (130) et l'échangeur thermique (141) de la section de refroidissement (140) sont des éléments de construction identique.

2. Pasteurisateur selon la revendication 1, dans lequel le tube (126) de l'échangeur thermique (121) de la section de chauffe (120), le tube (136) de la section de maintien thermostatique (130) et le tube (146) de l'échangeur thermique (141) de la section de refroidissement (140) ont chacun une forme de serpentin.

3. Pasteurisateur selon la revendication 1 ou 2, dans lequel l'échangeur thermique (121) de la section de chauffe (120), le tube (136) de la section de maintien thermostatique (130) et l'échangeur thermique (141) de la section de refroidissement (140) sont composés de matériau optiquement transparent.

4. Pasteurisateur selon la revendication 3, dans lequel l'échangeur thermique (121) de la section de chauffe (120), le tube (136) de la section de maintien thermostatique (130) et l'échangeur thermique (141) de la section de refroidissement (140) sont composés de verre.

5. Pasteurisateur selon l'une quelconque des revendications précédentes, dans lequel l'échangeur thermique (121) de la section de chauffe (120) et l'échangeur thermique (141) de la section de refroidissement (140) sont chacun un élément composé d'une seule pièce.
